# EUROPÄISCHE PATENTSCHRIFT

(11) **EP 0 932 611 B1**
(45) Veröffentlichungstag und Bekanntmachung des Hinweises auf die Patenterteilung: **12.12.2001**
(21) Anmeldenummer: 97909307.7
(22) Anmeldetag: 23.09.1997
(51) Int. Cl.: C07F 7/00, C07F 7/28, C07F 19/00, C08F 10/00

(54) **METALLKOMPLEXE MIT ADAMANTANÄHNLICHER STRUKTUR**
METAL COMPLEXES WITH AN ADAMANTANE-LIKE STRUCTURE
COMPLEXES METALLIQUES AVEC UNE STRUCTURE SEMBLABLE A L'ADAMANTANE

(30) Priorität: 14.10.1996 DE 19642354
(43) Veröffentlichungstag der Anmeldung: 04.08.1999
(73) Patentinhaber: BASF AKTIENGESELLSCHAFT, 67056 Ludwigshafen (DE)
(72) Erfinder: GEPRÄGS, Michael, D-67240 Bobenheim-Roxheim (DE); STÜRMER, Rainer, D-67127 Roedersheim (DE); WEISS, Horst, D-76139 Karlsruhe (DE); STEIGER, Susanne, D-67354 Römerberg (DE)
(86) Internationale Anmeldenummer: EP9705206
(87) Internationale Veröffentlichungsnummer: WO9816534

(56) Entgegenhaltungen:
- WO-A-95/06071
- DE-A- 4 420 783
- CHEMICAL ABSTRACTS, vol. 120, no. 8, 21.Februar 1994 Columbus, Ohio, US; abstract no. 93887d, GLERUP, J. ET AL.: "structural and magnetic characterization of an adamantane-like complex ion of chromium(III) and 1,3,5-triaminocyclohexane, (Cr4(tach)4(OH)6)6+" XP002051125 & INORG. CHIM. ACTA, Bd. 212, Nr. 1-2, 1993, Seiten 281-288,

## Beschreibung

Die vorliegende Erfindung betrifft Metallkomplexe der allgemeinen Formel I 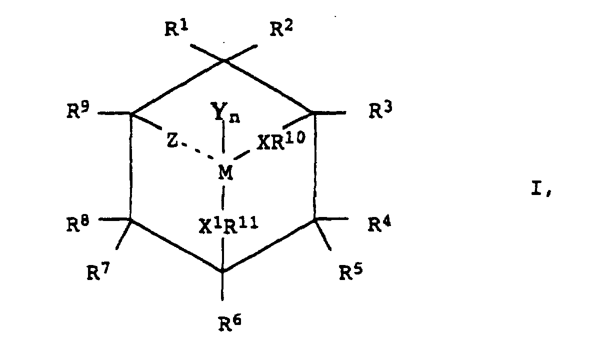 in der die Substituenten folgende Bedeutung haben:
- M: ein Metall der III., IV., V. oder VI. Nebengruppe des Periodensystems der Elemente oder ein Metall der Lanthanoidenreihe,
- Y: ein negatives Abgangsatom oder eine negative Abganggruppe,
- X und X¹: ein negativ geladenes oder neutrales Atom der IV., V. oder VI. Hauptgruppe des Periodensystems der Elemente,
- Z: Wasserstoff, C₁- bis C₁₀-Alkyl, C₃- bis C₁₀-Cycloalkyl, C₁- bis C₁₀-Alkoxy, C₁- bis C₁₀-Alkylthiolat oder Dialkylamid mit jeweils 1 bis 4 C-Atomen im Alkylrest,
- R¹ bis R¹¹: Wasserstoff, kohlenstofforganische oder siliciumorganische Reste,
- n: 0, 1 oder 2
und
die Wertigkeit von M (2+n) ist.

Weiterhin betrifft die vorliegende Erfindung Verfahren zur Herstellung solcher Metallkomplexe sowie dereh Verwendung als Bestandteil eines Katalysatorsystems zur Polymerisation von olefinisch ungesättigten Verbindungen.

Zur Polymerisation von olefinisch ungesättigten Verbindungen sind Metallocenkomplexe als Bestandteile von Katalysatorkomplexen bekannt. In der WO 95/06071 sind beispielsweise heterofunktionelle, Cyclopentadienylreste enthaltende Verbindungen beschrieben. Diese Klasse von Verbindungen vermag jedoch nicht, eine Kettenübertragung durch β-Hydrid-Eliminierung wirkungsvoll zu unterdrücken, was zu einem frühzeitigen Abbruch der Polymerisation und dadurch zu limitierten Molekulargewichten führt.

Aus der DE-A 44 20 783 sind heterofunktionelle, cyclopentadienylfreie Verbindungen bekannt, die allerdings eine offene Katalysatorstruktur aufweisen und daher nicht stereoselektiv sind bzw. eine Kettenübertragung durch β-Hydrid-Eliminierung begünstigen.

Aus J. Glerup et al, Inorganica Chimica Acta, Vol. 212 (1993), Seiten 281-288 sind tetranucleare chrom(III)-Komplexe des Liganden 1,3,5-Triaminocyclohexan bekannt.

Der vorliegenden Erfindung lag daher die Aufgabe zugrunde, neue Metallkomplexe zur Verfügung zu stellen, die als Bestandteile von Katalysatorsystemen zur Polymerisation von olefinisch ungesättigten Verbindungen eingesetzt werden können und dabei eine β-Hydrid-Eliminierung wirkungsvoll unterdrücken und stereoselektiv sind. Zudem sollen die neuen Metallkomplexe präparativ einfach herstellbar sein.

Demgemäß wurden die eingangs definierten Metallkomplexe gefunden.

Weiterhin wurden Verfahren zur Herstellung solcher Metallkomplexe sowie deren Verwendung als Bestandteil eines Katalysatorsystems zur Polymerisation von olefinisch ungesättigten Verbindungen gefunden.

Von den Metallkomplexen der allgemeinen Formel I sind diejenigen bevorzugt, in denen die Substituenten folgende Bedeutung aufweisen:
- M: ein Metall der IV. oder V. Nebengruppe des Periodensystems der Elemente, vorzugsweise ein Metall der IV. Nebengruppe, also Titan, Zirkon oder Hafnium, insbesondere Titan,
- Y: Wasserstoff, C₁- bis C₁₀-Alkyl, C₃- bis C₁₀-Cycloalkyl, C₁- bis C₁₀-Alkoxy, Dialkylamid, Alkylaryl, Arylalkyl, Halogenalkyl oder Halogenaryl mit jeweils 1 bis 10 C-Atomen im Alkylrest und 6 bis 20 C-Atomen im Arylrest oder Fluor, Chlor, Brom oder Iod, vorzugsweise C₁- bis C₄-Alkyl, C₁- bis C₄-Alkoxy oder Chlor, insbesondere Methyl, iso-Butyl, Methoxy, iso-Propoxy oder Chlor,
- X und X¹: ein negativ geladenes Atom der V. oder VI. Hauptgruppe des Periodensystems der Elemente, vorzugsweise N, P, O oder S als Anion,
- Z: Wasserstoff, C₁- bis C₄-Alkyl oder C₄- bis C₆-Cycloalkyl, vorzugsweise Wasserstoff, Methyl, Ethyl, n-Propyl oder Cyclohexyl,
- R¹ bis R¹¹: Wasserstoff, C₁- bis C₁₀-Alkyl, C₃- bis C₁₀-Cycloalkyl, C₆- bis C₂₀-Aryl, Alkylaryl, Arylalkyl, Halogenalkyl oder Halogenaryl mit jeweils 1 bis 10 C-Atomen im Alkylrest und 6 bis 20 C-Atomen im Arylrest oder Fluor, Chlor, Brom oder Iod, oder wobei zwei benachbarte Reste gemeinsam für 4 bis 5 C-Atome aufweisende cyclische Gruppen stehen können, oder Si(R¹²)₃ mit
- R¹²: C₁- bis C₁₀-Alkyl, C₃- bis C₁₀-Cycloalkyl oder C₆- bis C₁₅-Aryl,
vorzugsweise stehen R¹ bis R¹¹ für Wasserstoff oder C₁- bis C₁₀-Alkyl, insbesondere
- R¹ bis R⁸: für Wasserstoff, Methyl oder Ethyl,
- R⁹: für Wasserstoff, Methyl, Ethyl oder n-Propyl und
- R¹⁰ und R¹¹: für Methyl, Ethyl, n-Propyl oder iso-Propyl,
- n: bedeutet vorzugsweise die Zahl 2, so daß die Wertigkeit von M vorzugsweise +4 ist.

Beispiele für besonders bevorzugte Metallkomplexe der allgemeinen Formel I sind:
5,5-Dimethyl-1,3-di(methylamido)cyclohexantitandichlorid
5,5-Diethyl-1,3-di(methylamido)cyclohexantitandichlorid
5,5-Dipropyl-1,3-di(methylamido)cyclohexantitandichlorid
5,5-Diisopropyl-1,3-di(methylamido)cyclohexantitandichlorid
5,5-Dibutyl-1,3-di(methylamido)cyclohexantitandichlorid
5,5-Di-sec.-butyl-1,3-di(methylamido)cyclohexantitandichlorid
5,5-Di-tert.-butyl-1,3-di(methylamido)cyclohexantitandichlorid
5,5-Dimethyl-1,3-di(ethylamido)cyclohexantitandichlorid
5,5-Diethyl-1,3-di(ethylamido)cyclohexantitandichlorid
5,5-Dipropyl-1,3-di(ethylamido)cyclohexantitandichlorid
5,5-Diisopropyl-1,3-di(ethylamido)cyclohexantitandichlorid
5,5-Di-sec.-butyl-1,3-di(ethylamido)cyclohexantitandichlorid
5,5-Di-tert.-butyl-1,3-di(ethylamido)cyclohexantitandichlorid
5,5-Dimethyl-1,3-di(propylamido)cyclohexantitandichlorid
5,5-Diethyl-1,3-di(propylamido)cyclohexantitandichlorid
5,5-Dipropyl-1,3-di(propylamido)cyclohexantitandichlorid
5,5-Diisopropyl-1,3-di(propylamido)cyclohexantitandichlorid
5,5-Dibuty-1,3-di(propylamido)cyclohexantitandichlorid
5,5-Di-sec.-butyl-1,3-di(propylamido)cyclohexantitandichlorid
5,5-Di-tert.-butyl-1,3-di(propylamido)cyclohexantitandichlorid
5,5-Dimethyl-1,3-di(propylamido)cyclohexantitandichlorid
5,5-Diethyl-1,3-di(isopropylamido)cyclohexantitandichlorid
5,5-Dipropyl-1,3-di(isopropylamido)cyclohexantitandichlorid
5,5-Diisopropyl-1,3-di(isopropylamido)cyclohexantitandichlorid
5,5-Dibutyl-1,3-di(isopropylamido)cyclohexantitandichlorid
5,5-Di-sec.-butyl-1,3-di(isopropylamido)cyclohexantitandichlorid
5,5-Di-tert. -butyl-1,3-di(isopropylamido)cyclohexantitandichlorid
5,5-Dimethyl-1,3-di(butylamido)cyclohexantitandichlotid
5,5-Diethyl-1,3-di(butylamido)cyclohexantitandichlorid
5,5-Dipropyl-1,3-di(butylamido)cyclohexantitandichlorid
5,5-Diisopropyl-1,3-di(butylamido)cyclohexantitandichlorid
5,5-Dibutyl-1,3-di(butylamido)cyclohexantitandichlorid
5,5-Di-sec.-butyl-1,3-di(butylamido)cyclohexantitandichlorid
5,5-Di-tert.-butyl-1,3-di(butylamido)cyclohexantitandichlorid
5,5-Dimethyl-1,3-di(methylamido)cyclohexantitandimethyl
5,5-Diethyl-1,3-di(methylamido)cyclohexantitandimethyl
5,5-Dipropyl-1,3-di(methylamido)cyclohexantitandimethyl
5,5-Diisopropyl-1,3-di(methylamido)cyclohexantitandimethyl
5,5-Dibutyl-1,3-di(methylamido)cyclohexantitandimethyl
5,5-Di-sec.-butyl-1,3-di(methylamido)cyclohexantitandimethyl
5,5-Di-tert.-butyl-1,3-di(methylamido)cyclohexantitandimethyl
5,5-Dimethyl-1,3-di(ethylamido)cyclohexantitandimethyl
5,5-Diethyl-1,3-di(ethylamido)cyclohexantitandimethyl
5,5-Dipropyl-1,3-di(ethylamido)cyclohexantitandimethyl
5,5-Diisopropyl-1,3-di(ethylamido)cyclohexantitandichlorid
5,5-Di-sec.-butyl-1,3-di(ethylamido)cyclohexantitandimethyl
5,5-Di-tert.-butyl-1,3-di(ethylamido)cyclohexantitandimethyl
5,5-Dimethyl-1,3-di(propylamido)cyclohexantitandimethyl
5, 5-Diethyl-1,3-di(propylamido)cyclohexantitandimethyl
5,5-Dipropyl-1,3-di(propylamido)cyclohexantitandimethyl
5,5-Diisopropyl-1,3-di(propylamido)cyclohexantitandimethyl
5,5-Dibutyl-1,3-di(propylamido)cyclohexantitandimethyl
5,5-Di-sec.-butyl-1,3-di(propylamido)cyclohexantitandimethyl
5,5-Di-tert.-butyl-1,3-di(propylamido)cyclohexantitandimethyl
5,5-Dimethyl-1,3-di(propylamido)cyclohexantitandimethyl
5,5-Diethyl-1,3-di(isopropylamido)cyclohexantitandimethyl
5,5-Dipropy-1,3-di(isopropylamido)cyclohexantitandimethyl
5,5-Diisopropyl-1,3-di(isopropylamido)cyclohexantitandimethyl
5,5-Dibutyl-1,3-di(isopropylamido)cyclohexantitandimethyl
5,5-Di-sec.-butyl-1,3-di(isopropylamido)cyclohexantitandimethyl
5,5-Di-tert.-butyl-1,3-di(isopropylamido)cyclohexantitandimethyl
5,5-Dimethyl-1,3-di(butylamido)cyclohexantitandimethyl
5,5-Diethyl-1,3-di(butylamido)cyclohexantitandimethyl
5,5-Dipropyl-1,3-di(butylamido)cyclohexantitandimethyl
5,5-Diisopropyl-1,3-di(butylamido)cyclohexantitandimethyl
5,5-Dibutyl-1,3-di(butylamido)cyclohexantitandimethyl
5,5-Di-sec.-butyl-1,3-di(butylamido)cyclohexantitandimethyl
5,5-Di-tert.-butyl-1,3-di(butylamido)cyclohexantitandimethyl
5,5-Dimethyl-1,3-di(methylamido)cyclohexantitandiisopropoxid
5,5-Diethyl-1,3-di(methylamido)cyclohexantitandiisopropoxid
5,5-Dipropyl-1,3-di(methylamido)cyclohexantitandiisopropoxid
5,5-Diisopropyl-1,3-di(methylamido)cyclohexantitandiisopropoxid
5,5-Dibutyl-1,3-di(methylamido)cyclohexantitandiisopropoxid
5,5-Di-sec.-butyl-1,3-di(methylamido)cyclohexantitandiisopropoxid
5,5-Di-tert.-butyl-1,3-di(methylamido)cyclohexantitandiisopropoxid
5,5-Dimethyl-1,3-di(ethylamido)cyclohexantitandiisopropoxid
5,5-Diethyl-1,3-di(ethylamido)cyclohexantitandiisopropoxid
5,5-Dipropyl-1,3-di(ethylamido)cyclohexantitandiisopropoxid
5,5-Diisopropyl-1,3-di(ethylamido)cyclohexantitandiisopropoxid
5,5-Di-sec.-butyl-1,3-di(ethylamido)cyclohexantitandiisopropoxid
5,5-Di-tert.-butyl-1,3-di(ethylamido)cyclohexantitandiisopropoxid
5,5-Dimethyl-1,3-di(propylamido)cyclohexantitandiisopropoxid
5,5-Diethyl-1,3-di(propylamido)cyclohexantitandiisopropoxid
5,5-Dipropyl-1,3-di(propylamido)cyclohexantitandiisopropoxid
5,5-Diisopropyl-1,3-di(propylamido)cyclohexantitandiisopropoxid
5,5-Dibutyl-1,3-di(propylamido)cyclohexantitandiisopropoxid
5,5-Di-sec.-butyl-1,3-di(propylamido)cyclohexantitandiisopropoxid
5,5-Di-tert.-butyl-1,3-di(propylamido)cyclohexantitandiisopropoxid
5,5-Dimethyl-1,3-di(propylamido)cyclohexantitandiisopropoxid
5,5-Diethyl-1,3-di(isopropylamido)cyclohexantitandiisopropoxid
5,5-Dipropyl-1,3-di(isopropylamido)cyclohexantitandiisopropoxid
5,5-Diisopropyl-1,3-di(isopropylamido)cyclohexantitandiisopropoxid
5,5-Dibutyl-1,3-di(isopropylamido)cyclohexantitandiisopropoxid
5,5-Di-sec.-butyl-1,3-di(isopropylamido)cyclohexantitandiisopropoxid
5,5-Di-tert. -butyl-1,3-di(isopropylamido)cyclohexantitandiisopropoxid
5,5-Dimethyl-1,3-di(butylamido)cyclohexantitandiisopropoxid
5,5-Diethyl-1,3-di(butylamido)cyclohexantitandiisopropoxid
5,5-Dipropyl-1,3-di(butylamido)cyclohexantitandiisopropoxid
5,5-Diisopropyl-1,3-di(butylamido)cyclohexantitandiisopropoxid
5,5-Dibutyl-1,3-di(butylamido)cyclohexantitandiisopropoxid
5,5-Di-sec.-butyl-1,3-di(butylamido)cyclohexantitandiisopropoxid
5,5-Di-tert.-butyl-1,3-di(butylamido)cyclohexantitandiisopropoxid
5,5-Dimethyl-1,3-di(methylphosphido)cyclohexantitandichlorid
5,5-Diethyl-1,3-di(methylphosphido)cyclohexantitandichlorid
5,5-Dipropyl-1,3-di(methylphosphido)cyclohexantitandichlorid
5,5-Diisopropyl-1,3-di(methylphosphido)cyclohexantitandichlorid
5,5-Dibutyl-1,3-di(methylphosphido)cyclohexantitandichlorid
5,5-Di-sec.-butyl-1,3-di(methylphosphido)cyclohexantitandichlorid
5,5-Di-tert. -butyl-1,3-di(methylphosphido)cyclohexantitandichlorid
5,5-Dimethyl-1,3-di(ethylphosphido)cyclohexantitandichlorid
5,5-Diethyl-1,3-di(ethylphosphido)cyclohexantitandichlorid
5,5-Dipropyl-1,3-di(ethylphosphido)cyclohexantitandichlorid
5,5-Diisopropyl-1,3-di(ethylphosphido)cyclohexantitandichlorid
5,5-Di-sec.-butyl-1,3-di(ethylphosphido)cyclohexantitandichlorid
5,5-Di-tert.-butyl-1,3-di(ethylphosphido)cyclohexantitandichlorid
5,5-Dimethyl-1,3-di(propylphosphido)cyclohexantitandichlorid
5,5-Diethyl-1,3-di(propylphosphido)cyclohexantitandichlorid
5,5-Dipropyl-1,3-di(propylphosphido)cyclohexantitandichlorid
5,5-Diisopropyl-1,3-di(propylphosphido)cyclohexantitandichlorid
5,5-Dibutyl-1,3-di(propylphosphido)cyclohexantitandichlorid
5,5-Di-sec.-butyl-1,3-di(propylphosphido)cyclohexantitandichlorid
5,5-Di-tert.-butyl-1,3-di(propylphosphido)cyclohexantitandichlorid
5,5-Dimethyl-1,3-di(propylphosphido)cyclohexantitandichlorid
5,5-Diethyl-1,3-di(isopropylphosphido)cyclohexantitandichlorid
5,5-Dipropyl-1,3-di(isopropylphosphido)cyclohexantitandichlorid
5,5-Diisopropyl-1,3-di(isopropylphosphido)cyclohexantitandichlorid
5,5-Dibutyl-1,3-di(isopropylphosphido)cyclohexantitandichlorid
5,5-Di-sec.-butyl-1,3-di(isopropylphosphido)cyclohexantitandichlorid
5,5-Di-tert.-butyl-1,3-di(isopropylphosphido)cyclohexantitandichlorid
5,5-Dimethyl-1,3-di(butylphosphido)cyclohexantitandichlorid
5,5-Diethyl-1,3-di(butylphosphido)cyclohexantitandichlorid
5,5-Dipropyl-1,3-di(butylphosphido)cyclohexantitandichlorid
5,5-Diisopropyl-1,3-di(butylphosphido)cyclohexantitandichlorid
5,5-Dibutyl-1,3-di(butylphosphido)cyclohexantitandichlorid
5,5-Di-sec.-butyl-1,3-di(butylphosphido)cyclohexantitandichlorid
5,5-Di-tert.-butyl-1,3-di(butylphosphido)cyclohexantitandichlorid
5,5-Dimethyl-1,3-di(methylphosphido)cyclohexantitandimethyl
5,5-Diethyl-1,3-di(methylphosphido)cyclohexantitandimethyl
5,5-Dipropyl-1,3-di(methylphosphido)cyclohexantitandimethyl
5,5-Diisopropyl-1,3-di(methylphosphido)cyclohexantitandimethyl
5,5-Dibutyl-1,3-di(methylphosphido)cyclohexantitandimethyl
5,5-Di-sec.-butyl-1,3-di(methylphosphido)cyclohexantitandimethyl
5,5-Di-tert.-butyl-1,3-di(methylphosphido)cyclohexantitandimethyl
5,5-Dimethyl-1,3-di(ethylphosphido)cyclohexantitandimethyl
5,5-Diethyl-1,3-di(ethylphosphido)cyclohexantitandimethyl
5,5-Dipropyl-1,3-di(ethylphosphido)cyclohexantitandimethyl
5,5-Diisopropyl-1,3-di(ethylphosphido)cyclohexantitandichlorid
5,5-Di-sec.-butyl-1,3-di(ethylphosphido)cyclohexantitandimethyl
5,5-Di-tert. -butyl-1,3-di(ethylphosphido)cyclohexantitandimethyl
5,5-Dimethyl-1,3-di(propylphosphido)cyclohexantitandimethyl
5,5-Diethyl-1,3-di(propylphosphido)cyclohexantitandimethyl
5,5-Dipropyl-1,3-di(propylphosphido)cyclohexantitandimethyl
5,5-Diisopropyl-1,3-di(propylphosphido)cyclohexantitandimethyl
5,5-Dibutyl-1,3-di(propylphosphido)cyclohexantitandimethyl
5,5-Di-sec.-butyl-1,3-di(propylphosphido)cyclohexantitandimethyl
5,5-Di-tert.-butyl-1,3-di(propylphosphido)cyclohexantitandimethyl
5,5-Dimethyl-1,3-di(propylphosphido)cyclohexantitandimethyl
5,5-Diethyl-1,3-di(isopropylphosphido)cyclohexantitandimethyl
5,5-Dipropyl-1,3-di(isopropylphosphido)cyclohexantitandimethyl
5,5-Diisopropyl-1,3-di(isopropylphosphido)cyclohexantitandimethyl
5,5-Dibutyl-1,3-di(isopropylphosphido)cyclohexantitandimethyl
5,5-Di-sec.-butyl-1,3-di(isopropylphosphido)cyclohexantitandimethyl
5,5-Di-tert.-butyl-1,3-di(isopropylphosphido)cyclohexantitandimethyl
5,5-Dimethyl-1,3-di(butylphosphido)cyclohexantitandimethyl
5,5-Diethyl-1,3-di(butylphosphido)cyclohexantitandimethyl
5,5-Dipropyl-1,3-di(butylphosphido)cyclohexantitandimethyl
5,5-Diisopropyl-1,3-di(butylphosphido)cyclohexantitandimethyl
5,5-Dibutyl-1,3-di(butylphosphido)cyclohexantitandimethyl
5,5-Di-sec.-butyl-1,3-di(butylphosphido)cyclohexantitandimethyl
5,5-Di-tert.-butyl-1,3-di(butylphosphido)cyclohexantitandimethyl
5,5-Dimethyl-1,3-di(methylphosphido)cyclohexahtitandiisopropoxid
5,5-Diethyil-1,3-di(methylphosphido)cyclohexantitandiisopropoxid
5,5-Dipropyl-1,3-di(methylphosphido)cyclohexantitandiisopropoxid
5,5-Diisopropyl-1,3-di(methylphosphido)cyclohexantitandiisopropoxid
5,5-Dibutyl-1,3-di(methylphosphido)cyclohexantitandiisopropoxid
5,5-Di-sec.-butyl-1,3-di(methylphosphido)cyclohexantitandiisopropoxid
5,5-Di-tert.-butyl-1,3-di(methylphosphido)cyclohexantitandiisopropoxid
5,5-Dimethyl-1,3-di(ethylphosphido)cyclohexantitandiisopropoxid
5,5-Diethyl-1,3-di(ethylphosphido)cyclohexantitandiisopropoxid
5,5-Dipropyl-1,3-di(ethylphosphido)cyclohexantitandiisopropoxid
5,5-Diisopropyl-1,3-di(ethylphosphido)cyclohexantitandiisopropoxid
5, 5-Di-sec.-butyl-1,3-di(ethylphosphido)cyclohexantitandiisopropoxid
5,5-Di-tert.-butyl-1,3-di(ethylphosphido)cyclohexantitandiisopropoxid
5,5-Dimethyl-1,3-di(propylphosphido) cyclohexantitandiisopropoxid
5,5-Diethyl-1,3-di(propylphosphido)cyclohexantitandiisopropoxid
5,5-Dipropyl-1,3-di(propylphosphido)cyclohexantitandiisopropoxid
5,5-Diisopropyl-1,3-di(propylphosphido)cyclohexantitandiisopropoxid
5,5-Dibutyl-1,3-di(propylphosphido)cyclohexantitandiisopropoxid
5,5-Di-sec.-butyl-1,3-di(propylphosphido)cyclohexantitandiisopropoxid
5,5-Di-tert.-butyl-1,3-di(propylphosphido)cyclohexantitandiisopropoxid
5,5-Dimethyl-1,3-di(propylphosphido)cyclohexantitandiisopropoxid
5,5-Diethyl-1,3-di(isopropylphosphido)cyclohexantitandiisopropoxid
5,5-Dipropyl-1,3-di(isopropylphosphido)cyclohexantitandiisopropoxid
5,5-Diisopropyl-1,3-di(isopropylphosphido)cyclohexantitandiisopropoxid
5,5-Dibutyl-1,3-di(isopropylphosphido)cyclohexantitandiisopropoxid
5,5-Di-sec.-butyl-1,3-di(isopropylphosphido)cyclohexantitandiisopropoxid
5,5-Di-tert.-butyl-1,3-di(isopropylphosphido)cyclohexantitandiisopropoxid
5,5-Dimethyl-1,3-di(butylphosphido)cyclohexantitandiisopropoxid
5,5-Diethyl-1,3-di(butylphosphido)cyclohexantitandiisopropoxid
5,5-Dipropyl-1,3-di(butylphosphido)cyclohexantitandiisopropxoid
5,5-Diisopropyl-1,3-di(butylphosphido)cyclohexantitandiisopropoxid
5,5-Dibutyl-1,3-di(butylphosphido)cyclohexantitandiisopropoxid
5,5-Di-sec.-butyl-1,3-di(butylphosphido)cyclohexantitandiisopropxoid
5,5-Di-tert.-butyl-1,3-di(butylphosphido)cyclohexantitandiisopropoxid
2,5,5-Trimethyl-1,3-di(methylamido)cyclohexantitandichlorid
2,5,5-Trimethyl-1,3-di(ethylamido)cyclohexantitandichlorid
2,5,5-Trimethyl-1,3-di(propylamido)cyclohexantitandichlorid
2,5,5-Trimethyl-1,3-di(isopropylamido)cyclohexantitandichlorid
2,5,5-Trimethyl-1,3-di(butylamido)cyclohexantitandichlorid
2,5,5-Trimethyl-1,3-di(methylamido)cyclohexantitandimethyl
2,5,5-Trimethyl-1,3-di(benzylamido)cyclohexantitandichlorid
2,5,5-Trimethyl-1,3-di(methylamido)cyclohexantitandibenzyl
2-Ethyl-5,5-dimethyl-1,3-di(methylamido)cyclohexantitandichlorid
2-Ethyl-5,5-dimethyl-1,3-di(ethylamido)cyclohexantitandichlorid
2-Ethyl-5,5-dimethyl-1,3-di(isopropylamido)cyclohexantitandichlorid
2-Ethyl-5,5-dimethyl-1,3-di(propylamido) cyclohexantitandichlorid
2-Ethyl-5,5-dimethyl-1,3-di(butylamido)cyclohexantitandichlorid
2-Ethyl-5,5-dimethyl-1,3-di(methylamido)cyclohexantitandimethyl
2-Ethyl-5,5-dimethyl-1,3-di(methylamido)cyclohexantitandibenzyl
2-Butyl-5,5-dimethyl-1,3-di(methylamido)cyclohexantitandichlorid
2-Butyl-5,5-dimethyl-1,3-di(ethylamido)cyclohexantitandichlorid
2-Butyl-5,5-dimethyl-1,3-di(propylamido)cyclohexantitandichlorid
2-Butyl-5,5-dimethyl-1,3-di(butylamido)cyclohexantitandichlorid
2-Butyl-5,5-dimethyl-1,3-di(isopropylamido)cyclohexantitandichlorid
2-Butyl-5,5-dimethyl-1,3-di(methylamido)cyclohexantitandimethyl
2-Butyl-5,5-dimethyl-1,3-di(benzylamido)cyclohexantitandichlorid
2-Butyl-5,5-dimethyl-1,3-di(methylamido)cyclohexantitandibenzyl
2-Butyl-5,5-dimethyl-1,3-di(methylamido)cyclohexantitandibutyl
2-Benzyl-5,5-dimethyl-1,3-di(methylamido)cyclohexantitandichlorid
2-Benzyl-5,5-dimethyl-1,3-di(ethylamido)cyclohexantitandichlorid
2-Benzyl-5,5-dimethyl-1,3-di(propylamido)cyclohexantitandichlorid
2-Benzyl-5,5-dimethyl-1,3-di(isopropylamido)cyclohexantitandichlorid
2-Benzyl-5,5-dimethyl-1,3-di(butylamido)cyclohexantitandichlorid
2-Benzyl-5,5-dimethyl-1,3-di(benzylamido)cyclohexantitandichlorid
2-Benzyl-5,5-dimethyl-1,3-di(methylamido)cyclohexantitandimethyl
2-Benzyl-5,5-dimethyl-1,3-di(methylamido)cyclohexantitandibutyl
2-Benzyl-5,5-dimethyl-1,3-di(methylamido)cyclohexantitandibenzyl
2-Benzyl-5,5-dimethyl-1,3-di(benzylamido)cyclohexantitandimethyl
2-Benzyl-5,5-dimethyl-1,3-di(benzylamido)cyclohexantitandibenzyl
2-Benzyl-5,5-dimethyl-1,3-di(benzylamido)cyclohexantitandibutyl
2-Benzyl-5,5-dimethyl-1,3-di(isopropylamido)cyclohexantitandimethyl.

Die Metallkomplexe 1,3-Dimethylamido-5,5-dimethylcyclohexantitandichlorid, 1,3-Dimethylamido-5,5-dimethylcyclohexantitandimethyl und 1,3-Di(isopropylamido)-2,5,5-trimethylcyclohexantitandichlorid sind besonders bevorzugt.

Die erfindungsgemäßen Metallkomplexe der allgemeinen Formel I können nach folgenden Verfahren hergestellt werden:

Eine Verbindung der allgemeinen Formel II 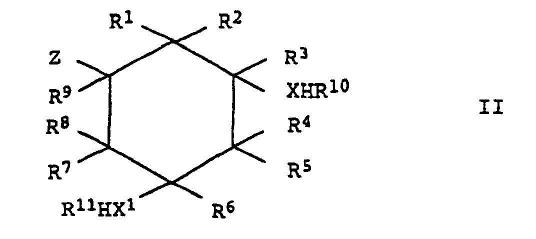 wird metalliert.

Vorzugsweise geht man so vor, daß eine Verbindung der allgemeinen Formel II mit Alkali- oder Erdalkalihydriden, -kohlenstofforganischen, -stickstofforganischen oder -siliciumorganischen Verbindungen umgesetzt wird und dann mit Halogen-, Alkoxy- oder Aryloxyverbindungen von M versetzt wird.

Verbindungen der allgemeinen Formel II lassen sich wie folgt herstellen:

Eine Verbindung der allgemeinen Formel V 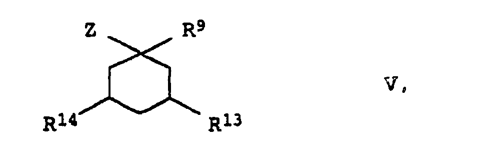 in der R¹³ und R¹⁴ für =0, =S oder =NR¹⁵
- mit R¹⁵: Wasserstoff, C₁ - bis C₁₀-Alkyl oder C₄- bis C₆-Cycloalkyl stehen
kann gegebenenfalls mit Alkali- oder Erdalkalihydriden oder - amiden, kohlenstofforganischen oder siliciumorganischen Verbindungen, die auch Halogene enthalten können, zu Verbindungen der allgemeinen Formel IV umgesetzt werden 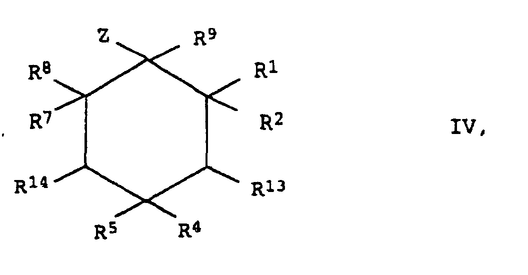 diese können gegebenenfalls zu Verbindungen der allgemeinen Formel III 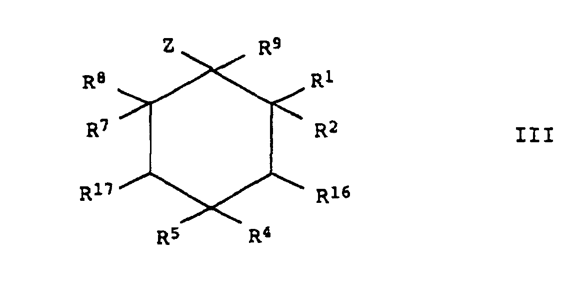 in denen R¹⁶ und R¹⁷ für -OH, -SH, -NHR¹⁵ stehen
reduziert werden,
diese können zu Verbindungen der allgemeinen Formel II umgesetzt werden, indem gegebenenfalls Tosylat-, Mesylat - oder Triflatgruppen eingeführt werden und anschließend mit Amin, Alkaliamid oder Alkaliphosphid vesetzt wird.

Verbindungen der allgemeinen Formel II können auch wie folgt hergestellt werden:

Eine Verbindung der allgemeinen Formel VI 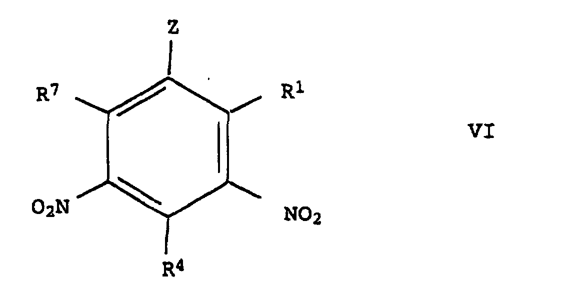 wird reduziert zu Verbindungen der allgemeinen Formel VII 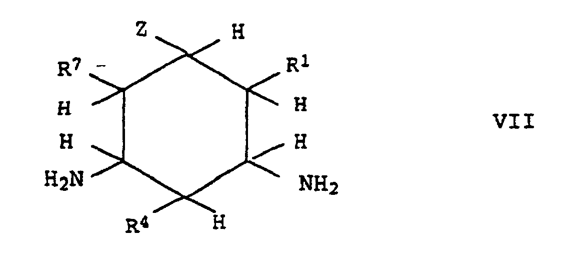 diese können gegebenenfalls am Stickstoff zu Verbindungen der allgemeinen Formel II alkyliert werden.

Bevorzugt geht man für die Herstellung von Verbindungen der allgemeinen Formel I so vor, daß man eine Verbindung der allgemeinen Formel II in einem Lösungsmittel wie THF, Diethylether, Dioxan oder Toluol, vorzugsweise in THF löst und bei Temperaturen im Bereich von -78 bis 60°C mit vorzugsweise 2,1 molaren Menge an Metallierungsreagenzien wie Alkalihydride, Butyllithium, Methyllithium, Phenyllithium, Natriumnaphtalin, Lithiumdiisopropylamid, Lithiumbistrimethylsilylamid, vorzugsweise Butyllithium umsetzt und anschließend mit Übergangsmetallhalogeniden, -alkoxiden oder -amiden bevorzugt -chloriden oder die Übergangsmetallchlorid-THF-Komplexe zur Reaktion bringt.

Gegebenenfalls können Verbindungen der allgemeinen Formel I durch Substitution der Halogenliganden an M modifiziert werden. Bevorzugt löst man Verbindungen der allgemeinen Formel I in Lösungmitteln wie THF, Diethylether oder Toluol bei Temperaturen im Bereich von -78 bis 100°C und versetzt mit mindestens doppelt molarer Menge an Methylmagnesiumchlorid, Butyllithium, Methyllithium, Benzylmagnesiumbromid, man erhält so Alkyl- oder Arylalkylderivate von Verbindungen der allgemeinen Formel I.

Die Verbindungen der allgemeinen Formel II erhält man bevorzugt durch
A) gegebenenfalls Umsetzung von Verbindungen der allgemeinen Formel V mit Alkalihydriden, Butyllithium, Methyllithium, Phenyllithium, Natriumnaphtalin, Lithiumdiisopropylamid, Lithiumbistrimethylsilylamid, Alkalialkoholaten vorzugsweise Lithiumdiisopropylamid oder Kalium-tert.-butanolat in Lösungsmitteln wie THF, Diethylether, Dioxan, Toluol oder Alkoholen, vorzugsweise THF oder Butanol, bei Temperaturen im Bereich von -78 bis 65°C mit 1 bis 3,5 molarer Menge an Alkylhalogeniden, Trialkylsiliciumchloriden oder Arylalkylhalogeniden zu Verbindungen der allgemeinen Formel IV. Verbindungen der allgemeinen Formel IV können bevorzugt durch Umsetzung mit Lithiumaluminiumhydrid, Natriumborhydrid oder anderen gängigen Reduktionsmitteln, wobei die Menge an Reduktionsmittel im doppelt molaren Verhältnis bei -78 bis 100°C in THF, Diethylether, Dioxan oder Toluol zugesetzt wird, zu Verbindungen der allgemeinen Formel III reduziert werden. Verbindungen der Formel III können bevorzugt mit p-Toluolsulfonsäurechlorid, Trifluormethansulfonsäureanhydrid oder Methansulfonsäurechlorid, besonders bevorzugt mit Trifluormethansulfonsäureanhydrid in Gegenwart von 1 bis 2 molaren Mengen an Basen wie Pyridin, Chinolin oder Triethylamin in Lösungsmitteln wie THF, DMF, Acetonitril, Dimethylsulfoxid, Diethylether oder Methylenchlorid bei Temperaturen im Bereich von -78 bis 60°C umgesetzt werden. Die Zwischenverbindungen werden bevorzugt in situ mit Methylamin, Lithiumisopropylamid, Lithiummethylamid, Lithiumbutylphosphid, Lithiumphenylphoshid bei Temperaturen im Bereich von -78 bis 60°C zu Verbindungen der allgemeinen Formel II umgesetzt.
B) Bevorzugt erhält man Verbindungen der allgemeinen Formel VII, in dem Verbindungen der allgemeinen Formel VI in Lösungsmitteln wie THF, Toluol, Diethylether, Dioxan, Methanol bei Temperaturen im Bereich von -78 bis 120°C gegebenenfalls in Gegenwart von Wasserstoff mit Reduktionsmitteln wie Ni, Platin, Raney-Nickel oder Ruthenium reduziert werden.
   Gegebenenfalls können Verbindungen der allgemeinen Formel VII bevorzugt in Lösungsmitteln wie THF, Diethylether oder Toluol gelöst werden und bei Temperaturen im Bereich von -78 bis 80°C mit gängigen Alkylierungsmitteln, beispielsweise Methyliodid oder iso-Propylbromid zu Verbindungen der allgemeinen Formel II umgesetzt werden.

Die erfindungsgemäßen Metallkomplexe sind präparativ einfach herstellbar und eignen sich als Bestandteile von Katalysatorsystemen zur Polymerisation von olefinisch ungesättigten Verbindungen. Die adamantanähnliche Struktur der erfindungsgemäßen Metallkomplexe wird durch reversible agostische Koordination erreicht, wodurch ein stereoselektives Katalysatorsystem entsteht, das wirkungsvoll eine Kettenübertragung durch β-Hydrid-Eliminierung unterdrückt.

### Beispiele

### Beispiel 1

### Darstellung von 1,3-Dimethylamido-5,5-dimethylcyclohexantitandichlorid I1

### f) 5,5-Dimethylcyclohexan-1,3-diol

14,0 g (0,1 mol) Dimedon wurden in 200 ml THF gelöst. Weiterhin wurden 3,8 g (0,1 mol) NaBH₄ und 5 mmol CeCl₃ gelöst in 50 ml THF bei -30°C zugefügt. Die Mischung wurde noch 2 h bei Raumtemperatur gerührt und bei 0°C mit Methanol/Wasser hydrolysiert. Die organische Phase wurde abgetrennt und das Lösungsmittel entfernt. Der Rückstand wurde mit Ethanol extrahiert und unumgesetztes Dimedon durch Kristallisation entfernt. Es entstand 11,5 g (80 %) 5,5-Dimethylcyclohexan-1,3-diol.

### g) 5,5-Dimethylcyclohexan-1,3-ditosylat

Eine Lösung aus 10,8 g (75 mmol) 5,5-Dimethylcyclohexan-1,3-diol und 26,7 g (0,14 mol) p-Toluolsulfonsäurechlorid in 180 ml Methylenchlorid wurde bei 0°C vorsichtig mit 0,28 mol absolutem Pyridin versetzt. Nach Erwärmen wurde nach 2 h bei Raumtemperatur gerührt und anschließend durch Zugabe von 100 g Eis und 30 ml konz. Schwefelsäure hydrolysiert. Die organische Phase wurde abgetrennt und das Lösungsmittel im Vakuum entfernt. Das Rohprodukt wurde aus Methylenchlorid/ Diethylether umkristallisiert. Ausbeute: 22,2 g (70 %).

### h) 1,3-Dimethylamino-5,5-dimethylcyclohexan

20,3 g (45 mmol) 5,5-Dimethylcyclohexan-1,3-ditosylat wurde in 200 ml Ethanol/Wasser gelöst und mit 90 mmol wässrigem Methylamin versetzt. Die Mischung wurde 12 h bei Raumtemperatur gerührt. Nach Zugabe von Natriumbicarbonat wurde die Lösung mehrmals mit Diethylether extrahiert. Die Etherextrakte wurden zur Trockene eingeengt und das Rohprodukt mit Wasser gewaschen. Ausbeute: 6,1 g (79 %).

### i) 1,3-Dimethylamido-5,5-dimethylcyclohexantitandichlorid I1

5,1 g (30 mmol) 1,3-Dimethylamino-5,5-dimethylcyclohexan wurden in 75 ml THF bei -78°C gelöst und mit 60 mmol n-Butyllithium versetzt. Die Mischung wurde auf Raumtemperatur erwärmt und 12 h gerührt. Das Lösungsmittel wurde entfernt und der Rückstand wurde mehrmals mit Diethylether digeriert. Die entstandene 1,3-Dimethylamido-5,5-dimethylcyclohexandilithium-Verbindung wurde erneut bei -78°C in 75 ml absolutem THF gelöst und mit einer Lösung von 5,9 g (31 mmol) TiCl₄ in 15 ml THF versetzt. Die Kühlung wurde entfernt und weitere 15 h gerührt. Das ausgefallene LiCl wurde abfiltriert und die THF-Lösung am Vakuum eingeengt. Das zurückgebliebene Öl wurde aus Diethylether/THF umkristallisiert, wobei ein kristalliner Feststoff entstand. Ausbeute: 6,7 g (78 %).

### Beispiel 2

### Darstellung von 1,3-Dimethylamido-5,5-dimethylcyclohexantitandimethyl I2

Bei -78°C wurden 33,3 mol (0,1 mol) einer 3,0 M-Lösung von Methylmagnesiumchlorid in THF zu 14,3 g (0,05 mol) 1,3-Diamino-5,5-dimethylcyclohexantitandichlorid I1 gegeben. Die Kühlung wurde entfernt und es wurde während 4 h auf Raumtemperatur erwärmt. Das Lösungsmittel wurde unter Vakuum entfernt und die zurückgebliebene ölige Suspension mit Diethylether extrahiert. Die vereinigten Etherextrakte wurden eingeengt und das Produkt durch Kühlen auf -30°C kristallisiert. Man erhielt 6,9 g (56 %) blaßgelbe Kristalle.

### Beispiel 3

### Darstellung von 1,3-Di(isopropylamido)-2,5,5-trimethylcyclohexantitandichlorid I3

### a) 2,5,5-Trimethylcyclohexan-1,3-dion

28,0 g (0,2 mol) Dimedon wurden in 150 ml absolutem t-Butanol gelöst und bei 40°C portionsweise mit 22,4 g (0,2 mol) Kalium-t-butanolat versetzt. Nach 2 h wurde die äquimolare Menge Methyliodid zugegeben. Nach weiteren 2 h wurde das Lösungsmittel im Vakuum entfernt und der verbleibende Rückstand dreimal mit Diethylether extrahiert. Die vereinigten Etherextrakte wurden bis zur Trockene eingeengt. Ausbeute: 26,2 g (85 %). Das Rohprodukt wurde nicht weiter gereinigt.

### b) 2,5,5-Trimethylcyclohexan-1,3-diol

23,1 g (0.15 mol) 2,5,5-Trimethylcyclohexan-1,3-dion wurden bei -30°C in 200 ml THF gelöst und vorsichtig mit 5,7 g (0,15 mol) LiAlH₄ versetzt. Die Mischung wurde 30 min bei -30°C und anschließend 15 h bei Raumtemperatur gerührt. Durch Zugabe von 50 ml absolutem Methanol wurde das unumgesetzte LiAlH₄ desaktiviert. Die Reaktionsmischung wurde mehrmals mit Dichlormethan extrahiert und die organische Phase nach Abtrennung eingeengt. Das Diol erhält man als cis/trans-Gemisch in 90 % Ausbeute (21,3 g).

### c) 2,5,5-Trimethylcyclohexan-1,3-ditosylat

Eine Lösung aus 15,8 g (0,1 mol) 2,5,5-Trimethylcyclohexan-1,3-diol und 36,2 g (0,19 mol) p-Toluolsulfonsäurechlorid in 200 ml Methylenchlorid wurde bei 0°C vorsichtig mit 0,38 mol absolutem Pyridin versetzt. Nach Auftauen wurde noch 2 h bei Raumtemperatur gerührt und anschließend durch Zugabe von 160 g Eis und 45 ml konz. Schwefelsäure hydrolysiert. Die organische Phase wurde abgetrennt und das Lösungsmittel im Vakuum entfernt. Das Rohprodukt wurde aus Methylenchlorid/Diethylether umkristallisiert. Ausbeute: 31,0 g (70 %).

### d) 1,3-Di(isopropylamino)-2,5,5-trimethylcyclohexan

30,3 g (0,065 mol) 2,5,5-Trimethylcyclohexan-1,3-ditosylat wurden bei -30°C in 250 ml THF gelöst und mit 0,13 mol Lithiumisopropylamid versetzt. Die Mischung wurde 2 h bei dieser Temperatur gerührt und anschließend weitere 12 h bei Raumtemperatur belassen. THF wurde im Vakuum entfernt und der Rückstand mittels Diethylether extrahiert. Der Ether wurde entfernt und das Rohprodukt weiter eingesetzt.
Ausbeute: 14,8 g (95 %).

### e) 1,3-Di(isopropylamido)-2,5,5-trimethylcyclohexantitandichlorid I3

Das Rohprodukt 1,3-Di(isopropylamino)-2,5,5-trimethylcyclohexan (14,8 g; 0,062 mol) wurde bei -78°C in 100 ml THF gelöst und mit 0,124 mol n-Butyllithium versetzt. Nach 30 min wurde die Kühlung entfernt und noch weitere 2 h bei Raumtemperatur gerührt. Die Lösung wurde zur Trockene eingeengt und der Rückstand mehrmals bei -78°C mit Diethylether/Hexan digeriert. Das zurückbleibende farblose Produkt wurde erneut in 100 ml THF gelöst und auf -78°C gekühlt. Innerhalb 30 min wurden 12,3 g (65 mmol) TiCl₄ zugegeben und die Mischung weitere 12 h bei Raumtemperatur gerührt. THF wurde entfernt und der Rückstand mehrmals mit Diethylether extrahiert. Die vereinigten Etherextrakte wurden eingeengt und das Rohprodukt aus Diethylether/THF umkristallisiert. Ausbeute: 14,4 g (65 %).

### Vergleichsbeispiel V1

### Darstellung von (N,N'-Dimethylamido-1,2-ethan)titandichlorid

3,5 g (40 mmol) N,N'-Dimethylethylendiamin wurden in 60 ml THF bei -78°C gelöst und mit 80 mmol n-Butyllithium versetzt. Die Mischung wurde auf Raumtemperatur erwärmt und 12 h gerührt. Das Lösungsmittel wurde entfernt und der Rückstand nochmals mit Diethylether/n-Hexan 1:1 digeriert.

Die entstandene (N,N'-Dimethylamido-1,2-ethan)dilithium-Verbindung wurde bei -78°C in 75 ml absolutem THF gelöst und mit 8,0 g (42 mmol) Titantetrachlorid versetzt. Die Kühlung wurde entfernt und weitere 12 h gerührt. Das ausgefallene LiCl wurde abfiltriert und die THF-Lösung im Vakuum eingeengt. Das zurückgebliebene Öl wurde aus Diethylether umkristallisiert, wobei ein kristalliner Feststoff entstand. Ausbeute 5,9 g (72 %).

## Patentansprüche

1. Metallkomplexe der allgemeinen Formel I 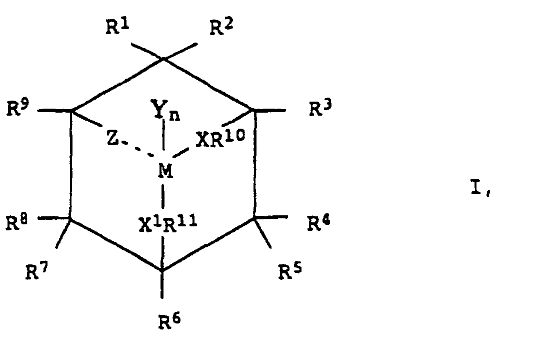 in der die Substituenten folgende Bedeutung haben:
M ein Metall der III., IV., V. oder VI. Nebengruppe des Periodensystems der Elemente oder ein Metall der Lanthanoidenreihe,
Y ein negatives Abgangsatom oder eine negative Abgangsgruppe,
X und X¹ ein negativ geladenes oder neutrales Atom der IV. V. oder VI. Hauptgruppe des Periodensystems der Elemente,
Z Wasserstoff, C₁- bis C₁₀-Alkyl, C₃ - bis C₁₀-Cycloalkyl, C₁- bis C₁₀-Alkoxy, C₁- bis C₁₀-Alkylthiolat oder Dialkylamid mit jeweils 1 bis 4 C-Atomen im Alkylrest,
R¹ bis R¹¹ Wasserstoff, kohlenstofforganische oder siliciumorganische Reste,
n 0, 1 oder 2
und
die Wertigkeit von M (2+n) ist.

2. Metallkomplexe nach Anspruch 1, **dadurch gekennzeichnet, daß** M in der allgemeinen Formel I für ein Metall der IV. oder V. Nebengruppe des Periodensystems der Elemente steht.

3. Metallkomplexe nach den Ansprüchen 1 bis 2, **dadurch gekennzeichnet, daß** Y in der allgemeinen Formel I für Wasserstoff, C₁- bis C₁₀-Alkyl, C₃- bis C₁₀-Cycloalkyl, C₁- bis C₁₀-Alkoxy, Dialkylamid, Alkylaryl, Arylalkyl, Halogenalkyl oder Halogenaryl mit jeweils 1 bis 10 C-Atomen im Alkylrest und 6 bis 20 C-Atome im Arylrest oder Fluor, Chlor, Brom oder Iod steht.

4. Metallkomplexe nach den Ansprüchen 1 bis 3, **dadurch gekennzeichnet, daß** X und X¹ in der allgemeinen Formel I für ein negativ geladenes Atom der V. oder VI. Hauptgruppe des Periodensystems der Elemente stehen.

5. Metallkomplexe nach den Ansprüchen 1 bis 4, **dadurch gekennzeichnet, daß** X und X¹ in der allgemeinen Formel I für ein negativ geladenes Atom der V. Hauptgruppe des Periodensystems der Elemente stehen.

6. Metallkomplexe nach den Ansprüchen 1 bis 5, **dadurch gekennzeichnet, daß** Z in der allgemeinen Formel I für Wasserstoff oder C₁- bis C₄-Alkyl oder C₃- bis C₆-Cycloalkyl steht.

7. Metallkomplexe nach den Ansprüchen 1 bis.6, **dadurch gekennzeichnet, daß** R¹ bis R¹¹ in der allgemeinen Formel I für Wasserstoff, C₁- bis C₁₀-Alkyl, C₃- bis C₁₀-Cycloalkyl, C₆- bis C₂₀-Aryl, Alkylaryl, Arylalkyl, Halogenalkyl oder Halogenaryl mit jeweils 1 bis 10 C-Atomen im Alkylrest und 6 bis 20 C-Atomen im Arylrest oder Fluor, Chlor, Brom oder Iod stehen, oder wobei zwei benachbarte Reste gemeinsam für 4 bis 15 C-Atome aufweisende cyclische Gruppen stehen können oder für Si(R¹²)₃ mit
R¹² C₁ - bis C₁₀-Alkyl, C₃- bis C₁₀-Cycloalkyl oder C₆- bis C₁₅-Aryl.

8. Verfahren zur Herstellung von Metallkomplexen der allgemeinen Formel I gemäß den Ansprüchen 1 bis 7, **dadurch gekennzeichnet, daß** man eine Verbindung der allgemeinen Formel II 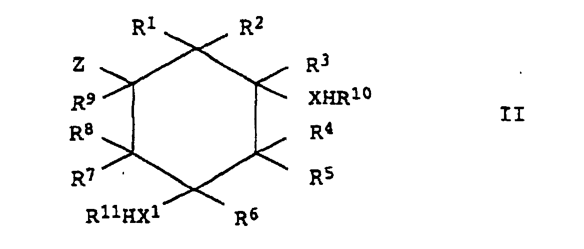 metalliert.

9. Verwendung von Metallkomplexen der allgemeinen Formel I gemäß den Ansprüchen 1 bis 7 als Bestandteil eines Katalysatorsystems zur Polymerisation von olefinisch ungesättigten Verbindungen.

## Claims

1. A metal complex of the formula I 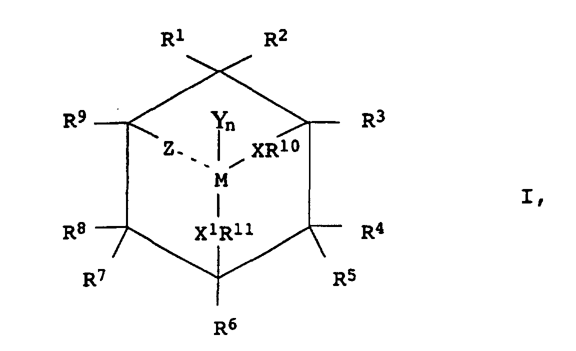 where the substituents have the following meanings:
M is a metal of transition group III, IV, V or VI of the Periodic Table of the Elements or a metal of the lanthanide series,
Y is a negative leaving atom or a negative leaving group,
X and X¹ are negatively charged or uncharged atoms of main group IV, V or VI of the Periodic Table of the Elements,
Z is hydrogen, C₁-C₁₀-alkyl, C₃-C₁₀-cycloalkyl, C₁-C₁₀-alkoxy, C₁-C₁₀-alkylthio or dialkylamido having from 1 to 4 carbon atoms in each alkyl radical,
R¹ to R¹¹ are hydrogen, carboorganic or organosilicon radicals,
n is 0, 1 or 2
and
the valence of M is 2+n.

2. A metal complex as claimed in claim 1, wherein M in the formula I is a metal of transition group IV or V of the Periodic Table of the Elements.

3. A metal complex as claimed in claim 1 or 2, wherein Y in the formula I is hydrogen, C₁-C₁₀-alkyl, C₃-C₁₀-cycloalkyl, C₁-C₁₀-alkoxy, dialkylamido, alkylaryl, arylalkyl, haloalkyl or haloaryl each having from 1 to 10 carbon atoms in the alkyl radical and from 6 to 20 carbon atoms in the aryl radical, or fluorine, chlorine, bromine or iodine.

4. A metal complex as claimed in any of claims 1 to 3, wherein X and X¹ in the formula I are each a negatively charged atom of main group V or VI of the Periodic Table of the Elements.

5. A metal complex as claimed in any of claims 1 to 4, wherein X and X¹ in the formula I are each a negatively charged atom of main group V of the Periodic Table of the Elements.

6. A metal complex as claimed in any of claims 1 to 5, wherein Z in the formula I is hydrogen or C₁-C₄-alkyl or C₃-C₆-cycloalkyl.

7. A metal complex as claimed in any of claims 1 to 6, wherein R¹ to R¹¹ in the formula I are hydrogen, C₁-C₁₀-alkyl, C₃-C₁₀-cycloalkyl, C₆-C₂₀-aryl, alkylaryl, arylalkyl, haloalkyl or haloaryl each having from 1 to 10 carbon atoms in the alkyl radical and from 6 to 20 carbon atoms in the aryl radical, or fluorine, chlorine, bromine or iodine, or two adjacent radicals may together form a cyclic group having from 4 to 15 carbon atoms, or Si(R¹²)₃ where
R¹² is C₁-C₁₀-alkyl, C₃-C₁₀-cycloalkyl or C₆-C₁₅-aryl.

8. A process for preparing a metal complex of the formula I as claimed in any of claims 1 to 7, which comprises metallating a compound of the formula II

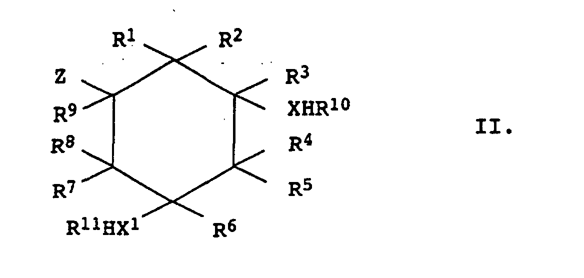

9. The use of a metal complex of the formula I as claimed in any of claims 1 to 7 as a constituent of a catalyst system for polymerizing olefinically unsaturated compounds.

## Revendications

1. Complexes métalliques de la formule générale I 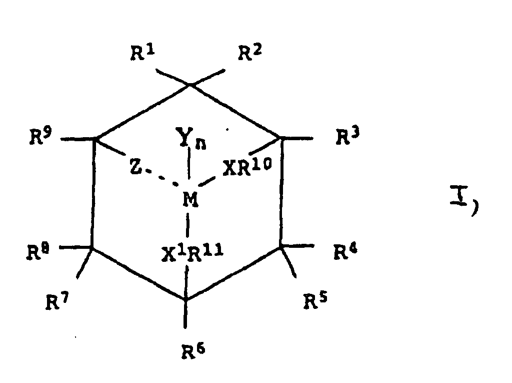 dans laquelle les substituants ont les significations suivantes:
M est un métal des sous-groupes III, IV, V ou VI du système périodique des éléments ou un métal de la série des lanthanides,
Y est un atome sortant négatif ou un groupe sortant négatif,
X et X¹ représentent un atome négativement chargé ou neutre des groupes principaux IV, V ou VI du système périodique des éléments,
Z représente de l'hydrogène, ou un radical alkyle en C₁ à C₁₀, cycloalkyle en C₃ à C₁₀, alcoxy en C₁ à C₁₀, alkylthiolate en C₁ à C₁₀ ou dialkylamide comportant à chaque fois de 1 à 4 atomes de carbone dans le radical alkyle,
R¹ à R¹¹ représentent de l'hydrogène ou un reste organique hydrocarboné ou azoté ou organosilicique,
n est égal à 0, 1 ou 2
et
la valence de M est (2+n).

2. Complexes métalliques selon la revendication 1, **caractérisés en ce que**, dans la formule générale I, M est un métal du sous-groupe IV ou V du système périodique des éléments.

3. Complexes métalliques selon les revendications 1 à 2, **caractérisés en ce que**, dans la formule générale I, Y représente de l'hydrogène ou un radical alkyle en C₁ à C₁₀, cycloalkyle en C₃ à C₁₀, alcoxy en C₁ à C₁₀, dialkylamide, alkylaryle, halogénoalkyle ou halogénoaryle comportant à chaque fois de 1 à 10 atomes de carbone dans le radical alkyle et de 6 à 20 atomes de carbone dans le radical aryle, ou bien du fluor, du chlore, du brome ou de l'iode.

4. Complexes métalliques selon les revendications 1 à 3, **caractérisés en ce que**, dans la formule générale I, X et X¹ représentent un atome négativement chargé des groupes principaux V ou VI du système périodique des éléments.

5. Complexes métalliques selon les revendications 1 à 4, **caractérisés en ce que**, dans la formule générale I, X et X¹ représentent un atome négativement chargé du Vème groupe principal du système périodique des éléments.

6. Complexes métalliques selon les revendications 1 à 5, **caractérisés en ce que**, dans la formule générale I, Z représente de l'hydrogène ou un radical alkyle en C₁ à C₄ ou cycloalkyle en C₃ à C₆.

7. Complexes métalliques selon les revendications 1 à 6, **caractérisés en ce que**, dans la formule générale I, R¹ à R¹¹ représentent de l'hydrogène, ou des radicaux alkyle en C₁ à C₁₀, cycloalkyle en C₃ à C₁₀, aryle en Ce à C₂₀, alkylaryle, arylalkyle, halogénoalkyle ou halogénoaryle comportant à chaque fois de 1 à 10 atomes de carbone dans le radical alkyle et de 6 à 20 atomes de carbone dans I radical aryle, ou bien du fluor, du chlore, du brome ou de l'iode, ou bien où deux restes voisins peuvent représenter ensemble des groupes cycliques comportant de 4 à 15 atome de carbone, ou bien Si(R¹²)₃, avec
R¹² représentant un radical alkyle en C₁ à C₁₀, cycloalkyle en C₃ à C₁₀ ou aryle en C₆ à C₁₅.

8. Procédé de préparation de complexes métalliques de la formule générale I selon les revendication 1 à 7, **caractérisé en ce que** l'on opère la métallation d'un composé de la formule générale II.

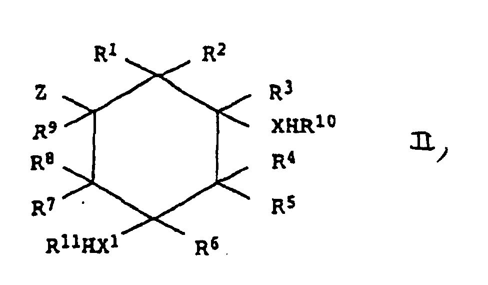

9. Utilisation de complexes métalliques de la formule générale I selon les revendications 1 à 7 comme constituants d'un système catalytique pour la polymérisation de composés oléfiniquement insaturés.
